# EUROPEAN PATENT APPLICATION

(11) **EP 4 840 893 A1**
(43) Date of publication of application: **18.11.2026**
(21) Application number: 25176786.9
(22) Date of filing: 15.05.2025
(51) Int. Cl.: C08G 18/38, B32B 25/12, B32B 27/28, C08G 18/10, C08G 18/48, C08G 18/50, C08G 18/66, C08G 18/72, C08G 18/73, C08G 18/76, C08G 18/79, C09J 5/02

(54) **COMPOSITION AND METHOD FOR BONDING ELASTOMERIC SUBSTRATES**

(71) Applicant: Henkel AG & Co. KGaA, 40589 Düsseldorf (DE)
(72) Inventor: Signorile, Marco, 27010 Vellezzo Bellini (IT); Scozzafava, Luca, 00126 Roma (IT); Salmoiraghi, Eleonora, 20018 Sedriano (MI) (IT)

(57) **Abstract**

A two-part (2K) adhesive composition having utility in the bonding of an elastomeric substrate to either a further elastomeric substrate or a metallic substrate, said composition comprising:
a first part comprising:
a) at least one secondary amine; and,
b) optionally at least one further active hydrogen compound which is distinct from the compound(s) of constituent a); and,

a second part comprising:
c) at least one polyisocyanate compound,
wherein the composition is characterized by a molar ratio of -N=C=O groups to active hydrogen atoms of from 0.9:1 to 2:1.

## Description

### FIELD OF THE INVENTION

The present disclosure is directed to a two-part (2K) composition having utility in the bonding of an elastomeric substrate to either a further elastomeric substrate or to a non-elastomeric substrate, in particular a metallic substrate. More particularly, the present invention is directed to a two-part (2K) adhesive composition comprising: a first part comprising at least one secondary amine; and, a second part comprising a polyisocyanate.

### BACKGROUND TO THE INVENTION

Rubber-to-rubber or rubber-to-metal bonding has conventionally been performed using pressure sensitive adhesives (PSA). The term "*pressure-sensitive adhesive*" means an adhesive or adhesive composition which carries out pressure sensitive adhesion with tack. Such adhesives have presented the important advantage that - after their application to the substrate(s) and solvent evaporation therefrom - the attained bond strength is significant enough to permit movement and positioning of the bonded rubber substrate(s) without debonding.

As an illustrative example thereof, US Patent No. 3,657,046 A (Furukawa et al.) discloses a process for adhering an unvulcanized compounded rubber to the same or a different compounded rubber, which process comprises: dissolving in an organic solvent a halogenated terpolymer of ethylene, an α-olefin other than ethylene and a nonconjugated diolefin having a chlorine content of 13 to 50 percent by weight or a chlorine content of 10 to 30 percent by weight and a bromine content of 1 to 10 percent by weight; applying the resulting solution to at least one of the substrates; contacting the substrates with each other through the applied solution; and, heating the resulting assembly under pressure.

Problematically, given that pressure sensitive adhesives are solvent-based, their use does present health and safety issues. The constituent organic solvents thereof are volatile and flammable which imposes restrictions on how the pressure sensitive adhesives are stored, transported and used. The emission of volatile organic compounds presents short-term health risks to the user of the adhesives, including *inter alia:* eye, nose and throat irritation; headaches; dizziness; breathing difficulties; and, mental confusion. Having regard to longer term exposure of the user, many organic solvents having utility in pressure sensitive adhesives are classified as carcinogenic, mutagenic or reprotoxic (CMR).

Given these health and safety concerns, certain authors have focused on developing alternatives to solvent-borne pressure sensitive adhesives for the bonding of rubber substrates to other elastomeric substrates.

US Patent No. 10,202,527B2 (Kulkarni et al.) discloses a process for bonding two elastomers which comprises applying to a first of the elastomers a primer-less, two-part adhesive formulation. Part A of the composition comprises: a polyol; an adhesion promoter; a chain extender; a catalyst; and, water scavenger. Part B of the composition consists of: a polyurethane prepolymer synthesized from at least one polyol and at least one isocyanate; a silane adhesion promoter; and, a plasticizer. The applied two-part adhesive formulation is cured to form the adhesive as a polyurethane.

CN109762499A (Inst. Petrochemistry, Heilongjiang Academy of Sciences) describes the use of a room temperature curing high-toughness epoxy resin for the bonding of nitrile rubber to *inter alia* other elastomers. The adhesive is prepared by heating to 130°C and reacting for at least 3 hours one hundred parts by weight of epoxy resin, from 5 to 25 parts by weight of an acrylate polymer having terminal carboxy groups and 0.2 parts by weight of catalyst; the obtained product is cooled to room temperature and added to from 30 to 60 parts by weight of polysulfide rubber. The surfaces of the elastomers to be bonded are cleaned to remove oil therefrom but no further pre-treatments are effected before application of the adhesive thereto.

JPH10183082A (Taoka Chemical Co. Ltd.) describes a hot-melt adhesive composition having utility in rubber-to-rubber bonding which does not use conventional organic solvents. The composition comprises, based on the weight of the composition: from 10 to 80 wt.% of polyamide resin obtained from a dimer acid and a diamine; from 10 to 90 wt.% of saponified ethylene-vinyl acetate copolymer having a melt flow index of 200 g/10min or lower and obtained by saponifying an ethylene-vinyl acetate copolymer having a vinyl acetate content of 3-60 wt.% to a saponification degree of about 30-100%; from 0.01 to 10 wt.% polycarboxylic anhydride; and, from 0 to 50 wt.% plasticizer and/or tackifier.

Whilst the above described solutions obviate the disadvantages associated with the volatile organic compound content of pressure sensitive adhesives, they are concomitantly considered to compromise the advantageous fast fixture time which was associated with said pressure sensitive adhesives.

### STATEMENT OF THE INVENTION

In accordance with a first aspect of the present disclosure there is provided a two-part (2K) adhesive composition comprising:
a first part comprising:
   a) at least one secondary amine; and,
   b) optionally at least one further active hydrogen compound which is distinct from the compound(s) of constituent a); and,
a second part comprising:
   c) at least one polyisocyanate compound,
wherein the composition is characterized by a molar ratio of -N=C=O groups to active hydrogen atoms of from 0.9:1 to 2:1.

In an embodiment, the two-part (2K) adhesive composition comprises, based on the weight of the composition:
from 20 to 80 wt.%, preferably from 20 to 60 wt.% and more preferably from 30 to 60 wt.% of a) said at least one secondary amine;
0 to 10 wt.%, preferably from 0 to 5 wt.% and more preferably from 0 to 2 wt.% of b) said least one further active hydrogen compound which is distinct from the compound(s) of constituent a); and,
from 20 to 80 wt.%, preferably from 20 to 60 wt.% and more preferably from 30 to 60 wt.% c) said at least one polyisocyanate compound,
wherein the composition is characterized by a molar ratio of -N=C=O groups to active hydrogen atoms of from 0.9:1 to 2:1, preferably from 0.9:1 to 1.5:1 and more preferably from 0.9:1 to 1.2:1.

It is preferred that a) said least one secondary amine does not possess primary amino groups. It is also preferred that the adhesive composition *in toto* is free of any compounds which possess primary amino groups.

Constituent a) of the composition may desirably comprise a1) at least one compound in accordance with Formula (A1) 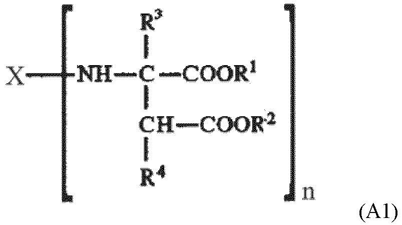 in which:
X is an organic group having a valency n and which is inert towards isocyanate (-N=C=O) functional groups at a temperature of 100°C or less;
R¹ is an organic group which is inert towards isocyanate (-N=C=O) functional groups at a temperature of 100°C or less;
R² is an organic group which is inert towards isocyanate (-N=C=O) functional groups at a temperature of 100°C or less;
or, R¹ and R² together with the β-carbon atom form a cycloaliphatic or heterocyclic ring;
R³ and R⁴ may be the same or different and represent hydrogen or an organic groups which is inert towards isocyanate (-N=C=O) functional groups at a temperature of 100°C or less; and,
n is an integer of from 1 to 6.

Independently of, or additional to the inclusion of compound(s) in accordance with Formula (A1), it is preferable that constituent a) comprises a2) at least one polyetheramine having secondary amino groups. In preferred embodiments, constituent a2) said polyetheramine having secondary amino groups has a weight average molecular weight (Mw) of from 500 to 5000 daltons, preferably from 500 to 2500 daltons.

Constituent c) of the two-part (2K) composition preferably comprises ci) at least one -N=C=O functional pre-polymer. In preferred embodiments, constituent ci) said at least one -N=C=O functional pre-polymer is characterized by at least one of: an -N=C=O content of from 5 to 30% based on the weight of the pre-polymer; an -N=C=O functionality of from 2.2 to 3.0; a viscosity at 20°C of from 300 to 35,000 mPa.s; and, a number average molecular weight (Mn) of from 500 to 30000 g/mol. The characterizations are not mutually exclusive and one, two, three or four thereof may be applicable.

Independently of, or additional to the inclusion of constituent ci), the two-part (2K) adhesive composition may preferably comprise cii) at least one diisocyanate chosen from: monomeric methylene diphenyl diisocyanate (MDI); oligomeric methylene diphenyl diisocyanate (pMDI); 1,5-pentamethylene diisocyanate (PDI); pentamethylene-diisocyanate (PDI) isocyanurate trimer; 1,6-hexamethylene diisocyanate (HDI); isophorone diisocyanate (IPDI); dicyclohexylmethane diisocyanate (H-MDI); xylene diisocyanate (XDI); hydrogenated xylene diisocyanate; tolylene diisocyanate (TDI); diphenylsulfone diisocyanate (SDI); m-xylylene diisocyanate; and, mixtures thereof.

The two-part (2K) adhesive composition of the present disclosure is curable at low temperatures, for instance at temperatures of from 10 to 100°C or from 10 to 60°C. The rate of cure at these temperatures enables the adhesive to achieve a fast fixture time - for instance of less than 5 minutes or even less than 3 minutes - when bonding a cold elastomeric substrate to either a further elastomeric substrate or to a substrate of a different type.

In accordance with a second aspect of the present disclosure, there is provided the use of the two-part (2K) adhesive composition as defined herein above and in the appended claims for bonding a first elastomeric substrate to either a second elastomeric substrate or a metallic substrate.

The present disclosure further provides a method for forming a bond between a first elastomeric substrate and a second substrate, said process comprising:
i) applying a first and a second composition to the surface of said first substrate, wherein:
   the first composition is an aqueous composition comprising chloride (Cl⁻); and,
   the second composition is an aqueous composition comprising peroxymonosulfate (HSO₅⁻/SO₃²⁻);
ii) optionally applying a third composition comprising activated carbon to the surface of said first substrate;
iii) incubating the first, second and optionally third composition with said first substrate for a time period and under conditions that allow chlorination of the surface of said first substrate;
iv) interposing the adhesive composition as defined herein above and in the appended claims between the chlorinated surface of the first substrate and the surface of the second substrate; and,
v) permitting the interposed adhesive composition to cure to form said bond.

The step of interposing the adhesive composition between the chlorinated surface of the first substrate and the surface of the second substrate and / or the step of permitting the interposed adhesive to cure may be performed under the application of pressure to the substrates.

In certain embodiments said second substrate is a metallic substrate. In other embodiments, said second substrate is a second elastomeric substrate. In this latter situation, it is preferred that said first substrate and said second substrate each comprise or consist of at least one elastomer having a glass transition temperature (Tg) of from -120 to 0°C.

Effective bonding has been demonstrated where said first substrate and said second substrate are independently selected from the group consisting of: natural rubber (NR); derivatives of natural rubber; ethylene-propylene-diene rubber (EPDM); ethylene propylene rubber (EPM); acrylonitrile-butadiene rubber (NBR); polychloroprene; styrene-butadiene rubber (SBR); styrene-butadiene-styrene rubber (SBS); butadiene rubber (BR); isoprene rubber (IR); styrene ethylene butylene styrene rubber (SEBS); rubbers based on copolymers of any two or more of styrene, butadiene, ethylene and isoprene; and, blends thereof. In exemplary embodiments, said first substrate and said second substrate are independently selected from natural rubber or styrene-butadiene rubber.

The present disclosure still further provides for a bonded product obtainable or obtained by the method as defined hereinabove and in the appended claims.

Where the aspects of the disclosure are described above as having certain embodiments, any one or more of those embodiments can be implemented in or combined with any one of the further embodiments, even if that combination is not explicitly described. Expressed differently, the described embodiments are not mutually exclusive unless stated to be so, and permutations thereof remain within the scope of this disclosure.

### DEFINITIONS

The terms *"comprising", "comprises"* and *"comprised of"* as used herein are synonymous with *"including", "includes", "containing"* or *"contains",* and are inclusive or open-ended and do not exclude additional, non-recited members, elements or method steps.

As used herein, the term *"consisting of'* excludes any element, ingredient, member or method step not specified. For completeness, the term *"comprising"* encompasses *"consisting of'.*

The words *"preferred", "preferably", "desirably"* and *"particularly"* are used frequently herein to refer to embodiments of the disclosure that may afford particular benefits, under certain circumstances. However, the recitation of one or more preferable, preferred, desirable or particular embodiments does not imply that other embodiments are not useful and is not intended to exclude those other embodiments from the scope of the disclosure.

The word *"exemplary"* is used herein to mean serving as an example, instance, or illustration. Any aspect or design described herein as *"exemplary"* is not necessarily to be construed as preferred or advantageous over other aspects or designs. Rather, use of the word exemplary is intended to present concepts in a concrete fashion.

As used throughout this application, the word *"may"* is used in a permissive sense - that is meaning to have the potential to - rather than in the mandatory sense.

The term *"plurality"* as used herein is defined as two or more than two.

When amounts, concentrations, dimensions and other parameters are expressed in the form of a range, a preferable range, an upper limit value, a lower limit value or preferable upper and limit values, it should be understood that any ranges obtainable by combining any upper limit or preferable value with any lower limit or preferable value are also specifically disclosed, irrespective of whether the obtained ranges are clearly mentioned in the context.

Further, in accordance with standard understanding, a weight range represented as being *"from 0 to x"* specifically includes 0 wt.%: the constituent or part defined by said range may be absent from the material or may be present in the material in an amount up to x wt.%.

As used herein, room temperature is 23°C plus or minus 2°C.

As used herein, *"ambient conditions"* means the temperature and pressure of the surroundings in which the composition is located or in which an adhesive or substrate is located.

The molecular weights referred to in this specification can be measured with gel permeation chromatography (GPC) using polystyrene calibration standards, such as is done according to ASTM 3536.

The solids content referred to in this specification may be determined in accordance with ISO 3251 at a temperature of 125°C for an initial sample mass of 2.0 g.

Where mentioned, a calculated glass transition temperature ("*T_{g}*") of a polymer or co-polymer is that temperature which may be calculated by using the Fox equation: 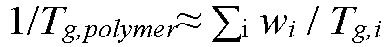 where: *T_{g,polymer}* and *T_{g,i}* are the glass transition temperature of the (co-)polymer and of the component monomers (i) respectively; and, *wᵢ* is the mass fraction of component i. The glass transition temperatures of certain homopolymers may be found in the published literature.

The actual glass transition temperature (T_{g}) of a (co-)polymer can be determined by differential scanning calorimetry (DSC) according to the methodology of Deutsches Institut f 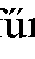 r Normung (DIN) 11357.

Viscosities of the compositions described herein are, unless otherwise stipulated, measured using the Brookfield Viscometer, Model RVT at standard conditions of 20°C and 50% Relative Humidity (RH). The viscometer is calibrated using silicone oils of known viscosities, which vary from 5,000 cps to 50,000 cps. A set of RV spindles that attach to the viscometer are used for the calibration. Measurements of the coating compositions are done using the No. 6 spindle at a speed of 20 revolutions per minute for 1 minute until the viscometer equilibrates. The viscosity corresponding to the equilibrium reading is then calculated using the calibration.

Shore A hardness may be determined by pressing a hand-held durometer - such as Zwick 3130 - onto a sample (≥ 6 mm thickness; 3 seconds contact time before measurement) in accordance with DIN ISO 7619-1.

Unless otherwise stated, the term *"particle size"* refers to the largest axis of the particle. In the case of a generally spherical particle, the largest axis is the diameter.

The term *"mean volume particle size" (Dv50),* as used herein, refers to a particle size corresponding to 50% of the volume of the sampled particles being greater than and 50% of the volume of the sampled particles being smaller than the recited Dv50 value. Particle size is determined herein by laser diffraction using Anton Paar Particle Size Analyzer (PSA) 1190.

The term *"active hydrogen atom"* refers to an hydrogen atom which displays activity according to the Zerewitinoff test as described by Kohlerin J. Am. Chem. Soc., 49, 3181 (1927), which is expressly incorporated herein by reference in its entirety in various non-limiting embodiments. Active hydrogen atoms can be derived from hydroxyl, thiol, primary amino, secondary amino and carboxyl groups.

As used herein, the term *"equivalent (eq.)"* relates, as is usual in chemical notation, to the relative number of reactive groups present in a reaction. The term *"equivalent weight"* as used herein refers to the molecular weight divided by the number of a function concerned. As such, *"amine hydrogen equivalent weight"* (EEW) means the weight of resin, in grams, that contains one amine hydrogen atom.

As employed herein a *"primary amino group"* refers to an NH₂ group that is attached to an organic radical, and *a "secondary amino group"* refers to an NH group that is attached to two organic radicals, which may also together be part of a ring. Where used, the term *"amine hydrogen"* refers to the hydrogen atoms of primary and secondary amino groups.

The *"amine value"* given herein is obtainable by titration with 0.1 N hydrochloric acid - in accordance with ASTM D2572-91 - and thereafter calculated back to mg KOH/g.

The *"acid value"* or *"acid number"* is a measure of the amount of free acid present in a compound: the acid value is the number of milligrams of potassium hydroxide required for the neutralization of free acid present in one gram of a substance (mg KOH/g). Any measured acid values given herein have been determined in accordance with German Standard DIN 53402.

The term *"drying"* as used herein refers to the process of reducing the solvent content of the compositions to be dried. The term is intended to encompass both partial as well as complete removal of the solvent from the materials: typically the drying steps of the present disclosure should remove at least 90 wt.% or at least 95 wt.% of unbound solvent. Drying may be accompanied by the solidification, hardening or setting of a material.

As used herein, the term *"metallic"* may be used to denote pure metal, metal alloys or metal composites. As used herein, the term *"alloy"* refers to a substance composed of two or more metals or of a metal and a non-metal which have been intimately united, usually by being fused together and dissolved in each other when molten. As exemplary metals and metallic alloys, mention may be made of: aluminum; aluminum alloys; bronze; beryllium; beryllium alloys; chromium; chromium alloys; cobalt; cobalt alloys; copper; copper alloys; gold; iron; iron alloys; steels; magnesium; magnesium alloys; nickel; nickel alloys; lead; lead alloys; tin; tin alloys, such as tin-bismuth and tin-lead; zinc; zinc alloys; and, superalloys, such as International Nickel 100 (IN-100) or International Nickel 718 (IN-718). Representative steels include: crucible steel; carbon steel; spring steel; alloy steel; maraging steel; and, stainless steel, inclusive of austenitic stainless steel, ferritic stainless steel, duplex stainless steel, and Martensitic stainless steel.

*"Two-part (2K) compositions"* in the context of the present disclosure are understood to be compositions in which a first part and a second part are stored in separate vessels because of their (high) reactivity. The two parts are mixed only before or during application and then react, typically without additional activation, with bond formation and thereby formation of a polymeric network. Herein higher temperatures may be applied in order to accelerate the cross-linking reaction.

As used herein, the term *"monomer"* refers to a substance that can undergo a polymerization reaction to contribute constitutional units to the chemical structure of a polymer. The term *"ethylenically unsaturated monomer"* as used herein, refers to any monomer containing a terminal double bond capable of polymerization under normal conditions of free-radical addition polymerization.

The term *"polymer"* as used herein, refers to a compound prepared by polymerizing monomers, whether of the same or a different type, that in polymerized form provide the recurring units that make up a polymer. The generic term *"polymer"* thus embraces both homopolymers and copolymers. The term *"copolymer"* as used herein is intended to denote a polymer having two or more different monomer units. The copolymer may, in certain embodiments, be a terpolymer with three or more different monomer units, or have four or more different monomer units. Further, copolymers of the present disclosure may be a random copolymer, a gradient copolymer, or a block copolymer formed by a controlled polymerization process.

The term *"elastomer"* is intended herein to designate a true elastomer or a polymer resin serving as a base constituent for obtaining a true elastomer. True elastomers are defined by the ASTM Special Technical Bulletin, No. 184 Standard as being materials which are capable of being stretched, at room temperature, to twice their intrinsic length and which, once they have been released after holding them under tension for 5 minutes, return to within 10 % of their initial length in the same time. For completeness, the term *"elastomer"* is intended to encompass: diene elastomers; non-diene elastomers; and, thermoplastic elastomers.

The term *"rubber"* as used herein means natural rubber and synthetic rubbers: it is intended to encompass vulcanized rubbers and to further encompass balata, gutta-percha, guayule, chicle and similar natural gums.

As used herein, *"C₁-Cₙ alkyl"* group refers to a monovalent group that contains 1 to n carbons atoms, that is a radical of an alkane and includes straight-chain and branched organic groups. As such, a *"C₁-C₁₈ alkyl"* group refers to a monovalent group that contains from 1 to 18 carbons atoms, that is a radical of an alkane and includes straight-chain and branched organic groups. Examples of alkyl groups include, but are not limited to: methyl; ethyl; propyl; isopropyl; n-butyl; isobutyl; sec-butyl; tert-butyl; n-pentyl; n-hexyl; n-heptyl; and, 2-ethylhexyl. In the present invention, such alkyl groups may be unsubstituted or may be substituted with one or more halogen. Where applicable for a given moiety (R), a tolerance for one or more non-halogen substituents within an alkyl group will be noted in the specification.

The term *"C₁-C₁₈ hydroxyalkyl"* as used herein refers to a HO-(alkyl) group having from 1 to 18 carbon atoms, where the point of attachment of the substituent is through the oxygen-atom and the alkyl group is as defined above.

An *"alkoxy group"* refers to a monovalent group represented by -OA where A is an alkyl group: non-limiting examples thereof are a methoxy group, an ethoxy group and an iso-propyloxy group. The term *"C₁-C₁₈ alkoxyalkyl"* as used herein refers to an alkyl group having an alkoxy substituent as defined above and wherein the moiety *(alkyl-O-alkyl)* comprises in total from 1 to 18 carbon atoms: such groups include methoxymethyl (-CH₂OCH₃), 2-methoxyethyl (-CH₂CH₂OCH₃) and 2-ethoxyethyl. Analogously, the term *"C₇-C₁₈ alkoxyaryl"* as used herein refers to an aryl group having an alkoxy substituent as defined above and wherein the moiety (*aryl-O-alkyl*) comprises in total from 7 to 18 carbon atoms.

The term *"C₃ -C₁₈ cycloalkyl"* is understood to mean a saturated, mono- or polycyclic hydrocarbon group having from 3 to 18 carbon atoms. In the present invention, such cycloalkyl groups may be unsubstituted or may be substituted with one or more halogen. Where applicable for a given moiety (R), a tolerance for one or more non-halogen substituents within a cycloalkyl group will be noted in the specification. Examples of cycloalkyl groups include: cyclopropyl; cyclobutyl; cyclopentyl; cyclohexyl; cycloheptyl; cyclooctyl; adamantane; and, norbornane.

As used herein, *"C₂-C₁₈ alkenyl"* refers to hydrocarbyl groups having from 2 to 18 carbon atoms and at least one unit of ethylenic unsaturation. The alkenyl group can be straight chained, branched or cyclic and may optionally be substituted with one or more halogen. Where applicable for a given moiety (R), a tolerance for one or more non-halogen substituents within an alkenyl group will be noted in the specification. The term *"alkenyl"* also encompasses radicals having *"cis"* and *"trans"* configurations, or alternatively, "*E*" and "Z" configurations, as appreciated by those of ordinary skill in the art. Examples of said C₂-C₂₀ alkenyl groups include, but are not limited to: -CH=CH₂; -CH=CHCH₃; -CH₂CH=CH₂; -C(=CH₂)(CH₃); -CH=CHCH₂CH₃; - CH₂CH=CHCH₃; -CH₂CH₂CH=CH₂; -CH=C(CH₃)₂; -CH₂C(=CH₂)(CH₃); -C(=CH₂)CH₂CH₃; - C(CH₃)=CHCH₃; -C(CH₃)CH=CH₂; -CH=CHCH₂CH₂CH₃; -CH₂CH=CHCH₂CH₃; - CH₂CH₂CH=CHCH₃; -CH₂CH₂CH₂CH=CH₂; -C(=CH₂)CH₂CH₂CH₃; -C(CH₃)=CHCH₂CH₃; - CH(CH₃)CH=CHCH, -CH(CH₃)CH₂CH=CH₂; -CH₂CH=C(CH₃)₂; 1-cyclopent-1-enyl; 1-cyclopent-2-enyl; 1-cyclopent-3-enyl; 1-cyclohex-1-enyl; 1-cyclohex-2-enyl; and, 1-cyclohexyl-3-enyl.

As used herein, an *"C₆-C₁₈ aryl"* group used alone or as part of a larger moiety - as in *"aralkyl group"* - refers to monocyclic, bicyclic and tricyclic ring systems in which the monocyclic ring system is aromatic or at least one of the rings in a bicyclic or tricyclic ring system is aromatic. The bicyclic and tricyclic ring systems include benzofused 2-3 membered carbocyclic rings. In the present invention, such aryl groups may be unsubstituted or may be substituted with one or more halogen. Where applicable for a given moiety (R), a tolerance for one or more non-halogen substituents within an aryl group will be noted in the specification. Exemplary aryl groups include: phenyl; indenyl; naphthalenyl, tetrahydronaphthyl, tetrahydroindenyl; tetrahydroanthracenyl; and, anthracenyl.

As used herein, *"alkylaryl"* refers to alkyl-substituted aryl groups and *"substituted alkylaryl"* refers to alkylaryl groups further bearing one or more substituents as set forth above. Further, as used herein *"aralkyl"* means an alkyl group substituted with an aryl radical as defined above.

The notation *"-ene"* as used in the context of *"C₂-Cₙ alkylene", "C₆-C₁₈ arylene"* and the like denotes a polyvalent radical derivable from, in these examples, a C₂-Cₙ alkyl or C₆-C₁₈ aryl group as defined herein.

The term *"hetero"* as used herein refers to groups or moieties containing one or more heteroatoms, such as N, O, Si and S. Thus, for example *"heterocyclic"* refers to cyclic groups having, for example, N, O, Si or S as part of the ring structure. *"Heteroalkyl", "heterocycloalkyl"* and *"heteroaryl"* moieties are alkyl, cycloalkyl and aryl groups as defined hereinabove, respectively, containing N, O, Si or S as part of their structure.

The term *"base"* as used herein refers to a species: which is capable of abstracting a proton in either a polar or non-polar solvent; or, which is capable of donating a hydroxide anion (OH⁻).

The present compositions are defined herein as being *"substantially free"* of certain compounds, elements, ions or other like components. The term *"substantially free"* is intended to mean that the compound, element, ion or other like component is not deliberately added to the composition and is present, at most, in only trace amounts which will have no (adverse) affect on the desired properties of the coating. An exemplary trace amount is less than 1000 ppm by weight of the composition. The term *"substantially free"* encompasses those embodiments where the specified compound, element, ion, or other like component is completely absent from the composition or is not present in any amount measurable by techniques generally used in the art.

### DETAILED DESCRIPTION OF THE INVENTION

The present disclosure provides for a two-part (2K) composition which comprises: a first part comprising: a) at least one secondary amine; and, b) optionally at least one further active hydrogen compound which is distinct from the compound or compounds of constituent a); and, a second part comprising: c) at least one polyisocyanate, wherein the composition is characterized by a molar ratio of -N=C=O groups to active hydrogen atoms of from 0.9:1 to 2:1, preferably from 0.9:1 to 1.5:1 or from 0.9:1 to 1.2:1.

### TWO-PART (2K) ADHESIVE COMPOSITION

### a) Secondary Amine

The two-part (2K) composition of the present disclosure comprises a) at least one secondary amine, wherein said at least one secondary amine preferably does not possess primary amino groups. The two-part (2K) composition may comprise, based on the weight of the composition, from 20 to 80 wt.%, for example from 20 to 60 wt.% or from 30 to 60 wt.% of a) said at least one secondary amine. Secondary amines, in possessing a more sterically hindered amino group as compared to the corresponding primary amines, react more controllably with electrophiles. As a corollary to this, hydrogen bonding in the adducts of the secondary amine is limited or eliminated.

In an important embodiment, constituent a) comprises a1) at least compound in accordance with Formula (A1) 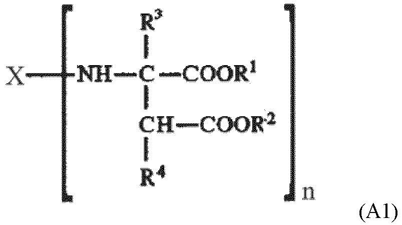 wherein:
X is an organic group having a valency n and which is inert towards isocyanate (-N=C=O) functional groups at a temperature of 100°C or less;
R¹ is an organic group which is inert towards isocyanate (-N=C=O) functional groups at a temperature of 100°C or less;
R² is an organic group which is inert towards isocyanate (-N=C=O) functional groups at a temperature of 100°C or less;
or, R¹ and R² together with the β-carbon atom form a cycloaliphatic or heterocyclic ring;
R³ and R⁴ may be the same or different and represent hydrogen or organic groups which are inert towards isocyanate (-N=C=O) functional groups at a temperature of 100°C or less; and,
n is an integer of from 1 to 6.

In certain embodiments of compounds in accordance with Formula (A1):
X is C₂-C₁₈ alkylene, C₃-C₁₈ cycloalkylene, C₆-C₁₈ arylene; C₇-C₁₈ aralkylene or C₇-C₁₈ alkarylene;
R¹ is C₁-C₁₂ alkyl, C₆-C₁₈ aryl or -NR^{x}Ry, wherein R^{x} is H or C₁-C₁₂ alkyl or C₆-C₁₈ aryl and R^{y} is C₁-C₁₂ alkyl or C₆-C₁₈ aryl;
R² is C₁-C₁₂ alkyl or C₆-C₁₈ aryl;
or, R¹ and R² together with the β-carbon atom form a cycloaliphatic or heterocyclic ring;
R³ and R⁴ may be the same or different and represent H, C₁-C₆ alkyl or C₆-C₁₈ aryl; and,
n is an integer of from 2 to 4.

In preferred embodiments of compounds in accordance with Formula (A1):
X is C₂-C₁₈ alkylene, C₃-C₁₈ cycloalkylene, C₆-C₁₈ arylene; C₇-C₁₈ aralkylene or C₇-C₁₈ alkarylene;
R¹ is C₁-C₆ alkyl, C₆-C₁₈ aryl or -NR^{x}R^{y}, wherein R^{x} is H or C₁-C₆ alkyl and R^{y} is C₁-C₆ alkyl;
R² is C₁-C₆ alkyl or C₆-C₁₈ aryl;
R³ and R⁴ may be the same or different and represent H, C₁-C₆ alkyl or C₆-C₁₈ aryl; and,
n is an integer of from 2 to 4.

Compounds in which: R¹ is C₁-C₄ alkyl; R² is C₁-C₄ alkyl; and, R³ and R⁴ are both H may be mentioned as being particularly preferred.

Without intention to limit the present disclosure, compounds in accordance with Formula (A1) may be obtained by reacting amines of the formula X-(NH₂)ₙ with compounds of the formula R¹OOC-CR³=CR⁴-COOR², wherein X, R¹, R², R³, R⁴ and n are as defined above. Typically such a reaction may be performed at a temperature of from 0 to 100°C and under conditions whereby the excess starting materials are removed by distillation after the reaction. The reaction may be performed in the absence of solvent or in the presence of suitable solvents. The reaction may be further exemplified by the number of moles of the reactant R¹OOC-C(R³)=C(R⁴)-COOR² being greater than or equal to the number of moles of amino groups provided by the reactant X-(NH₂)ₙ.

Suitable reactant amines of the formula X-(NH₂)ₙ are not particularly limited and include those in which the amino groups are attached to aliphatic, cycloaliphatic, araliphatic and/or aromatic carbon atoms. Exemplary amines X-(NH₂)ₙ include but are not limited to: ethylene diamine; 1,2-propane diamine; 1,3-propane diamine; 2-methyl-1,2-propane diamine; 2,2-dimethyl-1,3-propane diamine; 1,3- butane diamine; 1,4-butane diamine; 1,3- pentane diamine; 1,5-pentane diamine; 2-methyl-1,5-pentane diamine; 1,6-hexane diamine; 2,5-dimethyl-2,5-hexane diamine; 2,2,4- trimethyl-1,6-hexane diamine; 2,4,4-trimethyl-1,6-hexane diamine; 1,7-heptane diamine; 1,8-octane diamine; 1,9-nonane diamine; triaminononane; 1,10-decane diamine; 1,11-undecane diamine; 1,12-dodecane diamine; 1-amino-3-aminomethyl-3,5,5-trimethyl cyclohexane *(isophorone diamine, IPDA);* 2,4-hexahydrotoluylene diamine; 2,6-hexahydrotoluylene diamine; 2,4'-diamino-dicyclohexylmethane; 4,4'-diamino-dicyclohexylmethane; 3,3'-dialkyl-4,4'-diamino-dicyclohexyl methanes, such as 3,3'-dimethyl-4,4'-diamino-dicyclohexyl methane and 3,3'-diethyl-4,4'-diamino-dicyclohexyl methane; 1,3-cyclohexane diamine; 1,4-cyclohexane diamine; 1,3-bis(methylamino)-cyclohexane; 1,8-p-menthane diamine; hydrazine; hydrazides of semicarbazido carboxylic acids; bis-hydrazides; bis-semi-carbazides; phenylene diamine; 2,4-toluylene diamine; 2,6-toluylene diamine; 2,3-toluylene diamine; 3,4-toluylene diamine; 2,4'-diaminodiphenyl methane; and, 4,4'-diaminodiphenyl methane.

Further exemplary reactant amines of the formula X-(NH₂)ₙ include: amine-terminated polyethers, such as amine-terminated polyoxy(C₂-C₃)alkylenes; polyphenylene polymethylene polyamines obtainable by the aniline/formaldehyde condensation reaction; N,N,N-tris-(2-amino-ethyl)-amine; guanidine; melamine; N-(2-aminoethyl)-1,3-propane diamine; 3,3'-diamino-benzidine; and, 4-bis-(4'-aminobenzyl)-aniline.

As preferred reactant amines of the formula X-(NH₂)ₙ there may be mentioned: 1-amino-3-aminomethyl-3,5,5-trimethyl-cyclohexane *(isophorone diamine, IPDA);* bis-(4-aminocyclo-hexyl)-methane; bis-(4-amino-3-methylcyclohexyl)-methane; 1,6-diamino-hexane; 2-methyl pentamethylene diamine; ethylene diamine; triamino-nonane; 2,4-toluylene diamine; 2,6-toluylene diamine; 4,4'-diamino-diphenyl methane; and, 2,4'-diamino-diphenyl methane.

Compounds in accordance with Formula (A1) may be obtained commercially, of which an example includes: DESMOPHEN NH1220, derivative of diethyl maleate and 1,5-diamino-2- methylpentane, available from Covestro.

Independently of, or additional to the inclusion of a compound in accordance with Formula (A1) above, constituent a) may comprise a2) at least one polyetheramine having secondary amino groups. It is preferred that the or each polyetheramine included in the composition does not have primary amino groups and is exemplified by a weight average molecular weight (Mw) of from 500 to 5000 daltons, such as from 500 to 2500 daltons. Further, it preferred that said polyetheramines are polyoxyalkylenes or polyoxyalkylated compounds having secondary amino groups.

Exemplary polyetheramines having secondary amino groups, which may be included alone or in combination include: Jeffamine SD-231, Jeffamine SD-401, Jeffamine SD-2001 and Jeffamine ST-404, all from Huntsman. A particular preference for the use of Jeffamine SD-2001 may be noted.

For completeness, it is noted that an embodiment of the two-part (2K) adhesive composition provides for constituent a) thereof to comprise: a1) at least compound in accordance with Formula (A1); and, a2) at least one polyetheramine having secondary amino groups.

### b) Further Active Hydrogen Compound(s)

The first part of the adhesive composition may optionally comprise b) at least one further active hydrogen compound. The added amount of constituent b) is constrained by the aforementioned molar ratio of the active hydrogen atoms to the -NCO groups in the two-part (2K) composition. It is however preferred that constituent b) comprises from 0 to 10 wt.%, for instance from 0 to 5 wt.%, from 0 to 2 wt.% or from 0 to 1 wt.% of the total weight of the composition.

Exemplary further active hydrogen compounds having utility in constituent b) include chain extenders which are preferably characterized by: a weight average molecular weight (Mw) of from 18 to 500 g/mol; and, having at least two active hydrogen atoms. Water is not precluded from being such a compound. Equally, polyamines, polyhydric alcohols and sugars may find utility as chain extenders, optionally in combination with water.

As exemplary polyamines which may be used alone or in combination there may be mentioned: aminated polypropylene glycols such as Jeffamine D-400, available from Huntsman Chemical Company; hydrazine; piperazine; amino ethyl piperazine; 2-methyl piperazine; 1,5-diamino-3-methyl-pentane; isophorone diamine; ethylene diamine; diamino butane; hexane diamine; hexamethylene diamine; tetramethylene tetraamine; aminoethyl propyl trimethoxy silane; diethylene triamine; triethylene tetramine; triethylene pentamine; ethanolamine; and, lysine.

Exemplary polyhydric alcohols and sugars which may be used alone or in combination, include, but are not limited to: C₂-C₁₈ (cyclo)alkane diols of which mention may be made of ethanediol, di-, tri- or tetraethylene glycol, 1,2-propanediol, di-, tri-or tetrapropylene glycol, 1,3-propanediol, 1,4-butanediol, 1,3-butanediol, 2,3-butanediol, 1,6-hexanediol, 1,5-pentanediol, 2,2-dimethyl-1,3-propanediol (neopentylglycol), 1,4-dihydroxycyclohexane, 1,4-dimethylcyclohexane, 1,8-octanediol, 1,10-decanediol, 1,12-decanediol, 2,2,4- or 2,4,4-trimethyl-1,3-pentanediol; hydroquinone; catechol; resorcinol; phloroglucinol; pyrogallol; hydroxyhydroquinone; tris(hydroxymethyl)benzene; tris(hydroxymethyl)benzene with three methyl or ethyl substituents bonded to the remaining benzene carbon atoms; isosorbide; isomannide; isoidide; C₃-C₁₈ (cyclo)alkane triols of which mention may be made of glycerol, trimethylolpropane, 2-hydroxymethyl-1,3-propanediol, 1,1,1-tris(hydroxymethyl)propane, 1,1,1-tris(hydroxymethyl)ethane, cyclohexane-1,2,4-triol, 1,3,5-cyclohexanetriol, pentane-1,2,3-triol and hexane-1,3,5-triol; erythritol; 1,2,4,5-tetrahydroxybenzene; threitol; arabitol; xylitol; ribitol; mannitol; sorbitol; inositol; fructose; glucose; mannose; lactose; di(trimethylolpropane); trimethylolpropane ethoxylate; pentaerythritol allyl ether; and, pentaerythritol.

It is noted that at least one monol can preferably be employed as a further active hydrogen reactant. Exemplary monols include C₁-C₂₄ alkanols, of which mention may be made of methanol, ethanol, propanol, isopropanol, butanol, 2-butanol, isobutanol, pentanol, hexanol, heptanol, octanols, nonanol, 1-decanol, undecanol, dodecanol, tridecanol, tetradecanol, pentadecanol, hexadecanol, heptadecanol, octadecanol, nonadecanol and eicosanol. Mono-functional hydrophilic polyoxyalkylene - such as polyoxyethylene or polyoxpropylene - may also be used.

It is re-iterated that constituent b) is optional within the adhesive composition. In certain embodiments, the adhesive composition may be free of b) said further active hydrogen compounds. In other embodiments, the adhesive composition may be free of compounds bearing primary amino groups.

### c) Polyisocyanate

The second part of the adhesive composition comprises c) at least one polyisocyanate compound. As used herein, *"polyisocyanate"* means a compound comprising at least two -N=C=O functional groups, for example from 2 to 5 or from 2 to 4 -N=C=O functional groups. Suitable polyisocyanates include aliphatic, cycloaliphatic, aromatic and heterocyclic polyisocyanates; dimers and trimers thereof; -N=C=O functional pre-polymers; and, mixtures thereof.

Constituent c) should be included in the adhesive composition in an amount such that the composition is characterized by a molar ratio of -N=C=O groups to active hydrogen atoms of from 0.9:1 to 2:1, preferably from 0.9:1 to 1.5:1 or from 0.9:1 to 1.2:1. Subject to meeting the aforementioned molar ratio condition, constituent c) said at least one polyisocyanate compound should typically constitute from 20 to 80 wt.% of the composition. In certain embodiments, the adhesive composition may comprise, based on the weight of the composition, from 20 to 60 wt.% or from 30 to 60 wt.% of c) said at least one polyisocyanate compound.

In the present disclosure, constituent c) preferably comprises ci) at least one -N=C=O functional pre-polymer. Herein exemplary NCO-functional pre-polymers ci) are characterized by at least one of: an -N=C=O content of from 5 to 30 wt.%, preferably from 10 to 25 wt.%, as determined according to EN ISO 14896 by titration with di-n-butyl amine and determination of unreacted amine by back titration with hydrochloric acid; an -N=C=O functionality of from 2.0 to 3.0, preferably from 2.2 or 2.4 to 2.9; a viscosity at 20°C of from 300 to 35,000 mPa.s, preferably from 1,000 to 10,000 mPa.s; and, a number average molecular weight (Mn) of from 500 to 30,000, for example from 500 to 15000 or from 500 to 10000 g/mol. For completeness, these characterizations are not intended to be mutually exclusive: indeed, the pre-polymer may meet one, two, three or desirably four of these stated characterizations.

Said isocyanate functional pre-polymers are typically formed by the reaction of the aforementioned aliphatic, cycloaliphatic, aromatic and heterocyclic isocyanates with at least one polyol under a stoichiometric excess of - N=C=O groups to OH groups.

Conventionally, the or each reactant polyol may have a number average molecular weight (Mn) of from 200 to 50,000 g/mol, for instance from 200 to 8000 g/mol. Alternatively or additional to this molecular weight characterization, the hydroxyl number of the or each reactant polyol(s) should preferably be from 10 to 500 mg KOH/g, for instance from 20 to 400 mg KOH/g or from 50 to 400 mg KOH/g. Further, where two or more polyols are included in the first component, the average hydroxyl functionality of the polyols should be at least 2, for instance from 2 to 6 or from 2 to 4.

Exemplary reactant polyols may be chosen from: fatty polyols; polyester polyols; polyether polyols; polyether-polyester polyols; polycarbonate polyols; polyacrylate polyols; polydiene polyols; and, mixtures thereof. In particular, the reactant polyol may be chosen from: fatty polyols; polyether polyols; polyester polyols; polydiene polyols; and, mixtures thereof.

Exemplary reactant aliphatic and cycloaliphatic polyisocyanates - from which said pre-polymers may be derived - can comprise from 6 to 100 carbon atoms linked in a straight chain or cyclized and having at least two isocyanate reactive groups. Examples of suitable aliphatic isocyanates include but are not limited to straight chain isocyanates such as ethylene diisocyanate, trimethylene diisocyanate, tetramethylene diisocyanate, 1,5-pentamethylene diisocyanate (PDI), 1,6-hexamethylene diisocyanate (HDI), octamethylene diisocyanate, nonamethylene diisocyanate, decamethylene diisocyanate, 1,6,11-undecanetriisocyanate, 1,3,6-hexamethylene triisocyanate, bis(isocyanatoethyl)-carbonate, and bis (isocyanatoethyl) ether. Exemplary cycloaliphatic polyisocyanates include, but are not limited to, dicyclohexylmethane 4,4'-diisocyanate (H₁₂MDI), 1-isocyanatomethyl-3-isocyanato-1,5,5-trimethyl-cyclohexane (isophorone diisocyanate, IPDI), cyclohexane 1,4-diisocyanate, hydrogenated xylylene diisocyanate (H₆XDI), 1-methyl-2,4-diisocyanato-cyclohexane, m- or p-tetramethylxylene diisocyanate (m-TMXDI, p-TMXDI) and dimer fatty acid diisocyanate.

The term *"aromatic polyisocyanate"* is used herein to describe organic isocyanates in which the isocyanate groups are directly attached to the ring(s) of a mono- or polynuclear aromatic hydrocarbon group. In turn, the mono- or polynuclear aromatic hydrocarbon group means an essentially planar cyclic hydrocarbon moiety of conjugated double bonds, which may be a single ring or may include multiple condensed (fused) or covalently linked rings. The term aromatic also includes alkylaryl. Typically, the hydrocarbon (main) chain includes 5, 6, 7 or 8 main chain atoms in one cycle. Examples of such planar cyclic hydrocarbon moieties include, but are not limited to, cyclopentadienyl, phenyl, napthalenyl-, [10]annulenyl-(1,3,5,7,9-cyclodecapentaenyl-), [12]annulenyl-, [8]annulenyl-, phenalene (perinaphthene), 1,9-dihydropyrene and chrysene (1,2-benzophenanthrene). Examples of alkylaryl moieties are benzyl, phenethyl, 1-phenylpropyl, 2-phenylpropyl, 3-phenylpropyl, 1-naphthylpropyl, 2-naphthylpropyl, 3-naphthylpropyl and 3-naphthylbutyl.

Exemplary aromatic polyisocyanates - from which said pre-polymers may be derived - include, but are not limited to: all isomers of toluene diisocyanate (TDI), either in the isomerically pure form or as a mixture of several isomers; naphthalene 1,5-diisocyanate; diphenylmethane 4,4'-diisocyanate (MDI); diphenylmethane 2,4'-diisocyanate and mixtures of diphenylmethane 4,4'-diisocyanate with the 2,4' isomer or mixtures thereof with oligomers of higher functionality (so-called crude MDI); xylylene diisocyanate (XDI); diphenyl-dimethylmethane 4,4'-diisocyanate; di- and tetraalkyl-diphenylmethane diisocyanates; dibenzyl 4,4'-diisocyanate; phenylene 1,3-diisocyanate; and, phenylene 1,4-diisocyanate.

In an exemplary embodiment, constituent ci) said at least one -N=C=O functional pre-polymer comprises the residue of at least one diisocyanate chosen from: monomeric methylene diphenyl diisocyanate (MDI); polymeric methylene diphenyl diisocyanate (pMDI); 1,5-pentamethylene diisocyanate (PDI); 1,6-hexamethylene diisocyanate (HDI); isophorone diisocyanate (IPDI); dicyclohexylmethane diisocyanate (H-MDI); xylene diisocyanate (XDI); hydrogenated xylene diisocyanate; tolylene diisocyanate (TDI); diphenylsulfone diisocyanate (SDI); m-xylylene diisocyanate; and, mixtures thereof.

Good results have been obtained where constituent ci) said at least one -N=C=O functional pre-polymer comprises the residue of at least one diisocyanate chosen from: monomeric methylene diphenyl diisocyanate (MDI); polymeric methylene diphenyl diisocyanate (pMDI); 1,5-pentamethylene diisocyanate (PDI); 1,6-hexamethylene diisocyanate (HDI); tolylene diisocyanate (TDI); and, mixtures thereof.

Commercial examples of suitable -N=C=O functional pre-polymers include, but are not limited to, Adiprene LFM G1000 (Lanxess), Adiprene LFM G600 (Lanxess), Adiprene LF TE330 (Lanxess).

The present disclosure does not preclude constituent c) from further comprising cii) at least one polyisocyanate which is distinct from the -N=C=O functional pre-polymer of substituent ci). Exemplary polyisocyanates which may be included in or as substituent cii) may be chosen from the aliphatic, cycloaliphatic or aromatic polyisocyanates mentioned above as reactants from the pre-polymers of constituent ci) are derived. Where applicable, dimers and trimers of those polyisocyanates may be employed. Polyisocyanates, where applicable, may have been biuretized and / or isocyanurated by generally known methods, such as described in UK Patent No. 889,050.

In exemplary embodiment constituent c) comprises cii) at least one diisocyanate chosen from: monomeric methylene diphenyl diisocyanate (MDI); oligomeric methylene diphenyl diisocyanate (pMDI); 1,5-pentamethylene diisocyanate (PDI); pentamethylene-diisocyanate (PDI) isocyanurate trimer; 1,6-hexamethylene diisocyanate (HDI); isophorone diisocyanate (IPDI); dicyclohexylmethane diisocyanate (H-MDI); xylene diisocyanate (XDI); hydrogenated xylene diisocyanate; tolylene diisocyanate (TDI); diphenylsulfone diisocyanate (SDI); m-xylylene diisocyanate; and, mixtures thereof.

Good results have been obtained where constituent c) comprises cii) at least one diisocyanate chosen from: monomeric methylene diphenyl diisocyanate (MDI); polymeric methylene diphenyl diisocyanate (pMDI); 1,5-pentamethylene diisocyanate (PDI); pentamethylene-diisocyanate (PDI) isocyanurate trimer; 1,6-hexamethylene diisocyanate (HDI); tolylene diisocyanate (TDI); and, mixtures thereof.

Commercial examples of suitable polyisocyanates which may be used in or as substituent cii) include, without intention to limit the present disclosure: Desmodur product series, such as Desmodur E 744, Desmodur VK10, Desmodur VK5 and Desmodur VK20 available from Covestro Deutschland; Hysol HF6005 isocyanate, available from Henkel Corporation; Isonate M product series, available from The Dow Chemical Company; Lupranat product series, available from BASF; and, Suprasec product series, available from Huntsman.

For completeness, it is noted that an embodiment of the two-part (2K) adhesive composition provides for constituent c) thereof to comprise: ci) at least one -N=C=O functional pre-polymer; and, cii) at least one polyisocyanate which is distinct from the -N=C=O functional pre-polymer of substituent ci).

### d) Adjuvants and Additives

The two-part (2K) adhesive compositions may further comprise adjuvants and additives that can impart improved properties to these compositions. For instance, the adjuvants and additives may impart one or more of: improved elastic properties; improved elastic recovery; faster curing time; and, lower residual tack. Included among such adjuvants and additives are: catalysts; tougheners, such as epoxy-elastomer adducts and toughening rubber in the form of core-shell particles; plasticizers; stabilizers including UV stabilizers; antioxidants; wax; reactive diluents; dessicants or moisture scavengers; adhesion promoters; fungicides; flame retardants; fillers; color pigments or color pastes; solvents; and, non-reactive diluents.

Such adjuvants and additives can be used in such combination and proportions as desired, provided they do not adversely affect the nature and essential properties of the adhesive composition. While exceptions may exist in some cases, these adjuvants and additives should not *in toto* comprise more than 40 wt.% of the total composition and preferably should not comprise more than 30 wt.% of the composition.

As the present disclosure envisages the utility of two-part (2K) adhesive compositions, it is noted for completeness that, in general, adjunct materials and additives which contain reactive groups will be blended into the appropriate part of the two-part (2K) composition to ensure the storage stability thereof; unreactive materials may be formulated into either or both of the two parts.

The two-part (2K) composition - and conventionally the first part thereof - may comprise standard catalysts for the reaction between polyisocyanates and active hydrogen compounds, as known in the art. Depending on the nature of the polyisocyanate compound(s), the amount of catalyst employed is typically in the range from 0 to 2 wt.%, for example from 0.1 to 1 wt.% of the two-part (2K) composition.

Such catalysts include but are not limited to: stannous salts of carboxylic acids, such as stannous octoate, stannous oleate, stannous acetate and stannous laureate; dialkyltin dicarboxylates, such as dibutyltin dilaureate and dibutyltin diacetate; tertiary amines; alkanolamine compounds; 2,3-dimethyl-3,4,5,6-tetrahydropyrimidine; tetraalkylammonium hydroxides; alkali metal hydroxides; alkali metal alcoholates; tin alkoxides, such as dibutyltin dimethoxide, dibutyltin diphenoxide and dibutyltin diisoproxide; tin oxides, such as dibutyltin oxide and dioctyltin oxide; the reaction products of dibutyltin oxides and phthalic acid esters; tin mercaptides; alkyl titanates; organoaluminum compounds such as aluminum trisacetylacetonate, aluminum trisethylacetoacetate and diisopropoxyaluminum ethylacetoacetate; chelate compounds such as zirconium tetraacetylacetonate and titanium tetraacetylacetonate; organosilicon titanium compounds; bismuth tris-2-ethylhexanoate, bismuth neodecanoate complexes and complexes of bismuth with hydroxypropyl ethylene diamine and hydroxylethyl ethylene diamine, available as Bicat^{®} catalysts from Everchem Specialty Chemicals; acid compounds such as phosphoric acid and p-toluenesulfonic acid; triphenylborane; triphenylphosphine; 1,8-diazabicycloundec-7-ene (DBU); 1,5-diazabicyclo[4.3.0]non-5-ene; 1,4-diazabicyclo[2.2.2]octane; 4-dimethylaminopyridine; 1,5,7-triazabicyclo[4.4.0]dec-5-ene; 7-methyl-1,5,7-triazabicyclo[4.4.0]dec-5-ene; 1,8-bis(tetramethylguanidino)naphthalene; and, 2-tert-butyl-1,1,3,3-tetramethylguanidine.

A *"plasticizer"* for the purposes of this disclosure is a substance that decreases the viscosity of the curable composition and thus facilitates its processability. Herein the plasticizer may constitute up to 20 wt.%, for example from 1 to 10 wt.% or from 1 to 7 wt.%, based on the total weight of the composition, and is preferably selected from the group consisting of: diurethanes; ethers of monofunctional, linear or branched C4-C16 alcohols, such as Cetiol OE (obtainable from BASF); esters of abietic acid, butyric acid, thiobutyric acid, acetic acid, propionic acid esters and citric acid; esters based on nitrocellulose and polyvinyl acetate; fatty acid esters; dicarboxylic acid esters; esters of OH-group-carrying or epoxidized fatty acids; glycolic acid esters; benzoic acid esters; phosphoric acid esters; sulfonic acid esters; trimellitic acid esters; polyether plasticizers, such as endcapped polyethylene or polypropylene glycols; polystyrene; hydrocarbon plasticizers; chlorinated paraffin; and, mixtures thereof.

*"Stabilizers"* for purposes of this disclosure are to be understood as antioxidants, UV stabilizers or hydrolysis stabilizers. Herein stabilizers may constitute *in toto* from 0 to 10 wt.%, for example from 0 to 5 wt.%, based on the total weight of the composition. Standard commercial examples of stabilizers suitable for use herein include: sterically hindered phenols; thioethers; benzotriazoles; benzophenones; benzoates; cyanoacrylates; acrylates; amines of the hindered amine light stabilizer (HALS) type; phosphorus; sulfur; and, mixtures thereof.

The addition of certain additives may promote the adhesion of the curable composition - and the cured adhesive obtained therefrom - to particular substrates. In this regard, the curable, liquid-state composition may comprise from 0 to 5 wt.%, for example from 0.5 to 5 wt.% based on the weight of the composition, of at least one adhesion promoter.

In certain embodiments, the adhesion promoter may be selected from the group consisting of: morin(2-(2,4-dihydroxy phenyl)-3,5,7-trihydroxy-4H-1-cumarone-4-ketone); 3,7-dihydroxy-2-naphthoic acid (3,7-dihydroxy naphthlene-2-carboxylic acid); pyrogallol carboxylic acid (2,3,4-trihydroxybenzoic acid); 3,4-dihydroxybenzene guanidine-acetic acid; gallic acid (3,4,5-trihydroxybenzoic acid); para-aminosalicylic acid (4-amino-2-hydroxybenzoic acid, PAS); flutter acid (4,4'-methylene-bis(3-hydroxy-2-naphthoic acid)); citric acid (2-hydroxypropane-1,2,3-tricarboxylic acid); silanes, like a secondary amino-functional silane or an epoxy functional silane oligomer, and, mixtures thereof. Of these compounds a preference for the use - alone or in combination - of citric acid, gallic acid and, in particular, para-aminosalicylic acid (PAS) may be mentioned.

It is noted that compounds having metal chelating properties may also be used in the compositions of the present disclosure to help enhance the adhesion of the cured composition to a substrate surface. Also suitable for use as adhesion promoters are the acetoacetate-functionalized modifying resins sold by King Industries under the trade name K-FLEX XM-B301.

Optionally, filler may be included in the first component, the second component or both of the first and second components of the composition. The total amount of fillers present in the two-part (2K) adhesive compositions of the present disclosure will typically be from 0 to 15 wt.%, for example from 0 to 10 wt.% or from 0 to 5 wt.%, based on the total weight of the composition. The desired viscosity of the curable composition will typically be determinative of the total amount of filler added: for instance, to be readily extrudable out of a conventional dispensing apparatus - such as a tube - the compositions should possess a viscosity of from 3000 to 150,000, preferably from 40,000 to 80,000 mPas, or even from 50,000 to 60,000 mPas as measured within two minutes after mixing of the respective parts thereof.

Broadly, there is no particular intention to limit the shape of the particles employed as fillers: particles that are acicular, spherical, ellipsoidal, cylindrical, bead-like, cubic or platelet-like may be used alone or in combination. Moreover, it is envisaged that agglomerates of particles, including agglomerates of more than one particle type, may be used. It is preferred however that the particles of filler have an aspect ratio of less than 5, such as less than 2, less than 1.5 or less than 1.3. The use of ellipsoidal or spherical particles, for instance, can serve to obviate the composition having an undesirably high viscosity at the conventional loading of the filler.

Equally, there is no particular intention to limit the size of the particles employed as fillers. However, the filler should *in toto* possess a mean volume particle size (Dv50), as measured by laser diffraction, of from 0.1 to 500 µm, for example from 0.5 to 200 µm or from 0.5 to 100 µm. Independently of or additional to this overall mean volume particle size, the filler may have a polymodal particle size distribution which may be the consequence of combining two or more particulates (P1, P2) which are characterized by different mean volume particle sizes (Dv50^{P1}, Dv50^{P2}).

Exemplary inorganic fillers having utility herein include, but are not limited to, chalk, lime powder, precipitated and/or pyrogenic (*fumed*) silica, zeolites, bentonites, magnesium carbonate, diatomite, alumina, clay, talc, titanium oxide, iron oxide, zinc oxide, sand, quartz, flint, mica, glass powder, and other ground mineral substances. Organic fillers can also be used, in particular carbon black, graphite, wood fibers, wood flour, sawdust, cellulose, cotton, pulp, cotton, wood chips, chopped straw, chaff, ground walnut shells, and other chopped fibers. Short fibers such as glass fibers, glass filament, polyacrylonitrile, carbon fibers, Kevlar fibers, or polyethylene fibers can also be added. Aluminum powder is likewise suitable as a filler.

Also suitable as fillers are hollow spheres having a mineral shell or a plastic shell. These can be, for example, hollow glass spheres that are obtainable commercially under the trade names Glass Bubbles^{®}. Plastic-based hollow spheres, such as Expancel^{®} or Dualite^{®}, may be used and are described in EP 0 520 426 B1: they are made up of inorganic or organic substances and each have a diameter of 1 mm or less, preferably 500 µm or less.

Fillers which impart thixotropy to the composition may be utility in certain application for many applications: such fillers are also described as rheological adjuvants and include, for instance, hydrogenated castor oil, fatty acid amides and swellable plastics, such as PVC.

In certain embodiments, the two-part (2K) adhesive composition comprises pyrogenic and / or precipitated silica. The pyrogenic and/or precipitated silica may advantageously have a BET surface area from 10 to 90 m²/g: when they are used, such silicas do not cause any additional increase in the viscosity of the composition according to the present disclosure, but do contribute to strengthening the cured composition. It is likewise conceivable to use pyrogenic and/or precipitated silicic acids having a higher BET surface area, advantageously from 100 to 250 m²/g, in particular from 110 to 170 m²/g, as a filler: because of the greater BET surface area, the effect of strengthening the cured composition is achieved with a smaller proportion by weight of silica.

A need might also occasionally exist to lower the viscosity of the composition according to the present disclosure for specific applications. Whilst this might be effected using organic solvents, this is not preferred. It is preferred that that the two-part (2K) composition comprises less than 2 wt.% of organic solvent, based on the weight of the composition. More particularly, the two-part (2K) adhesive composition should be substantially free of organic solvent.

The at least partial exclusion of organic solvents and non-reactive diluents enables the two-part (2K) composition to possess a volatile organic compound (VOC) content, as measured in accordance with ISO 11890-2: 2006, of at most about 20 g/l, for instance at most about 10 g/l, such as at most about 5 g/l or even at most about 1 g/l.

### Method and Applications

To form the two-part (2K) adhesive compositions, the reactive parts are brought together and mixed in such a manner as to induce the hardening thereof. The reactive compounds should be mixed under sufficient shear forces to yield a homogeneous mixture. It is considered that this can be achieved without special conditions or special equipment. That said, suitable mixing devices might include: static mixing devices; magnetic stir bar apparatuses; wire whisk devices; augers; batch mixers; planetary mixers; C.W. Brabender or Banburry^{®} style mixers; and, high shear mixers, such as blade-style blenders and rotary impellers.

For small-scale applications in which volumes of less than 2 liters will generally be used, an illustrative packaging for the two-part (2K) compositions will be side-by-side double cartridges or coaxial cartridges, in which two tubular chambers are arranged alongside one another or inside one another and are sealed with pistons: the driving of these pistons allows the components to be extruded from the cartridge, advantageously through a closely mounted static or dynamic mixer. For larger volume applications, the two parts of the composition may advantageously be stored in drums or pails: in this case, the two parts are extruded via hydraulic presses, in particular by way of follower plates, and are supplied via pipelines to a mixing apparatus which can ensure fine and highly homogeneous mixing of the first and second parts. In any event, for any package it is typical that the parts be disposed with an airtight and moisture-tight seal, so that both components can be stored for a long time, ideally for 12 months or longer.

Non-limiting examples of two-part dispensing apparatuses and methods that may be suitable for the present disclosure include those described in U.S. Patent No. 6,129,244 and US Patent No. 8,313,006.

As noted above, the adhesive may be used to bond an elastomeric substrate to either a further elastomeric substrate or a non-elastomeric substrate, in particular a metallic substrate. In either case, the substrate surfaces are conventionally pre-prepared for the application of the adhesive composition and such preparation will typically include the removal of foreign matter from the relevant surfaces. That said, the type of substrate to be bonded may be determinative of the specific preparation process(es) applied.

### BONDING METHODOLOGY

The present disclosure provides a method for forming a bond between a first elastomeric substrate and a second substrate, said process comprising:
i) applying a first and a second composition to the surface of said first substrate, wherein:
   the first composition is an aqueous composition comprising chloride (Cl⁻); and,
   the second composition is an aqueous composition comprising peroxymonosulfate (HSO₅⁻/SO₅²⁻);
ii) optionally applying a third composition comprising activated carbon to the surface of said first substrate;
iii) incubating the first, second and optionally third composition with said first substrate for a time period and under conditions that allow chlorination of the surface of said first substrate;
iv) interposing the adhesive composition as defined in any one of claims 1 to 12 between the chlorinated surface of the first substrate and the surface of the second substrate; and,
v) permitting the interposed adhesive composition to cure to form said bond.

The recited method as a whole is conducive to being performed automatically. To facilitate bond formation, the step of interposing the adhesive composition between the chlorinated surface of the first substrate and the surface of the second substrate and / or the step of permitting the interposed adhesive to cure may be performed under the application of pressure to the substrates.

### First Composition

As noted above, the first composition is an aqueous composition comprising chloride (Cl⁻). It is preferred that the first composition is an aqueous solution of a chloride salt, containing chloride ions. Said chloride salt is preferably an alkali metal chloride salt: the use of potassium or sodium chloride may be mentioned with a preference noted for the use of sodium chloride due to its easy availability, costs and high water solubility.

The amount of chloride present in the aqueous solution is in principle only limited by the solubility of the chloride salt used. It is preferred, however, that the first composition is an aqueous solution which contains said chloride ions (Cl⁻) in a concentration of from 1 to 6 moles per litre, for instance from 2 to 6 moles per litre or from 4 to 6 moles per litre.

In an embodiment, the first composition comprises from 0.1 to 5 wt.%, based on the weight of the composition, of at least one base. The composition may preferably comprise from 0.1 to 2.5 wt.%, for example from 0.1 to 2 wt.% of said least one base.

In certain embodiments, which are not intended to be mutually exclusive of the preferred weight ranges given above, the added amount of base should be such that the first composition has a pH of from 7 to 13, for example from 8 to 12.

Typically the or each base included in the composition will be selected from the group consisting of:
alkali metal hydroxides; alkali metal alkoxides;
ammonia;
quaternary ammonium hydroxide compounds having the general formula (NR^{a}₄)⁺(OH)⁻, wherein each R^{a} is independently selected from C₁-C₄ alkyl;
aliphatic, aromatic or mixed aliphatic-aromatic monoamines having the general formula N(R^{b})(R^{c})(R^{d}) wherein: R^{b} is C₁-C₁₂ alkyl, C₁-C₁₂ hydroxyalkyl, C₂-C₁₂ alkoxyalkyl, C₃-C₁₈ cycloalkyl, C₂-C₁₂ alkenyl, C₆-C₁₀ aryl, C₇-C₁₈ aralkyl or C₇-C₁₈ alkylaryl; and, R^{c} and R^{d} are independently selected from hydrogen, C₁-C₁₂ alkyl, C₁-C₁₂ hydroxyalkyl, C₂-C₁₂ alkoxyalkyl, C₃-C₁₈ cycloalkyl, C₂-C₁₂ alkenyl, C₆-C₁₀ aryl, C₇-C₁₈ aralkyl or C₇-C₁₈ alkylaryl;
aliphatic, aromatic or mixed aliphatic-aromatic polyamines wherein two or more amino groups - N(R^{c})(R^{d}), which amino groups may be the same or different and of which R^{c} and R^{d} are as defined above, are linked by an alkylene, hydroxyalkylene, alkoxyalkylene, cycloalkylene, alkenylene, arylene, aralkylene or alkylarylene group;
C₁-C₉ heterocyclic amines;
C₁-C₉ heteroaryl amines;
basic amino acids, such as arginine and lysine; and,
amino sugars.

Suitable alkali metal alkoxides will conventionally be selected from aliphatic, aromatic or araliphatic alkoxides of lithium, sodium or potassium. Non-limiting examples thereof are lithium, sodium or potassium methoxide, ethoxide, n-propoxide, isopropoxide, n-butoxide, sec-butoxide, tert-butoxide, n-pentoxide, isopentoxide, hexoxide, amyl alkoxide, 3,7-dimethyl-3-octoxide, phenoxide, 2,4-di-tert-butylphenoxide, 2,6-di-tert-butylphenoxide, 3,5-di-tert-butylphenoxide and 2,4-di-tert-butyl-4-methylphenoxide. Preference is given to using the aliphatic (C₁-C₄)alkoxides, in particular methoxides, ethoxides, n-propoxides, isopropoxides, n-butoxides, sec-butoxides and tert-butoxides of sodium, potassium or lithium.

As noted, the composition may optionally comprise ammonia (NH₃) as a base, either independently or in combination with other of the listed bases. For completeness, the constituent weight of ammonia included in the composition is to be calculated on the basis of NH₃. The ammonia will be present in the aqueous compositions as an ammonia solution NH₃(aq) which encompasses weakly basic solutions of ammonia in water which may referred to in the art as ammonium hydroxide, ammonia water, ammonia liquor, aqua ammonia, aqueous ammonia, or simply ammonia. While the term *"ammonium hydroxide"* suggests a base with the composition [NH₄⁺][OH⁻], it is virtually impossible to isolate samples of NH₄OH, insomuch as these ions do not comprise a significant fraction of the total amount of ammonia in an ammonia solution, except in the case of extremely dilute ammonia solutions.

In accordance with a preferred embodiment, the base of the first composition is selected from alkali metal hydroxides. A preference for sodium hydroxide or potassium hydroxide may be mentioned.

### Second Composition

The second composition is an aqueous composition comprising a peroxymonosulfate salt, which salt contains peroxymonosulfate anions (HSO₅⁻/SO₅²⁻). Exemplary salts are those of alkali metals and of alkaline earth metals: a preference may be noted for salts of alkali metals and in particular for the use of potassium peroxymonosulfate (KHSO₅).

The second composition may be provided as: an aqueous solution; a slurry consisting of a saturated aqueous solution and particulate salt; or, a paste of the peroxymonosulfate salt in water. Such a paste may be derived simply by the wetting of the salt. That said, the peroxymonosulfate (HSO₅⁻/SO₅²⁻) concentration in the second composition is preferably from 10 to 30 moles per litre, for example from 15 to 25 or from 18 to 24 moles per litre.

The chloride- and peroxymonosulfate-containing compositions are used in amounts that maximize the generation of free chlorine. Accordingly, the amount actually used can be determined based on the respective concentration of the solutions, slurries or pastes employed. Typically, if the concentrations are in the preferred ranges disclosed herein, the first and second composition are used in a ratio by weight of 3:1 to 1:3, preferably 2:1 to 1:2, more preferably 1.5:1 to 1:1.5.

In certain embodiments, which are not intended to be mutually exclusive of the preferred weight ranges given above, the added amount of base should be such that the first composition has a pH of below 3, preferably from 0 to 2.

The first and second composition can, in addition to the chloride and the peroxymonosulfate, respectively, comprise adjunct ingredients, including but not limited to: co-solvent; levelling agent; foam suppressing agent; and, rheology control agent. Such adjunct ingredients may be included in one or both of said first and second compositions: the selection of adjuncts for each composition may be made independently. That aside, the first and second compositions should preferably be substantially free of organic solvents.

Independently, the total amount of rheology control agent in the first and second compositions should not exceed 10 wt.%, based on the weight of the composition. The first or second composition may comprise, for example from 0 to 5 wt.% or from 0 to 2 wt.% of rheology control agent, based on the weight of the composition.

The rheology control agent may comprise fillers, thickeners and combinations thereof. Exemplary thickeners include but are not limited to: clay based thickeners, such as organoclays; polysaccharides, such as guar and xanthan; polyacrylates; and, associative thickeners. Mention may, in particular, be made of the use as a polysaccharide thickener of cellulose or cellulose derivatives, such as: carboxymethylcellulose; methylcellulose; hydroxyethylcellulose; hydroxyethylmethylcellulose; hydroxypropylmethylcellulose; cellulose nanofibers; and, cellulose nanocrystals.

### Third Composition

The third composition comprises or consists of activated carbon. The term *"activated carbon"* is being used in accordance with its recognized meaning in the art and may be derived from a number of substances having high carbon contents and of which examples include coal, coconut shell and wood. Whilst it is envisaged that the activated carbon may be provide as an aqueous dispersion optionally containing adjunct materials as mentioned above, it is preferred that the activated caron is provided in solid form. Mention may be made of the provision of activated carbon as: an activated carbon powder; granular activated carbon; and, activated carbon flakes. Exemplary activated carbon particles may have a particle size, as determined by sieve analysis, of less than 5mm, preferably less than 1mm or less than 0.5mm. Suitable activated carbon particles may be obtained from Kuraray Company.

### Steps of the Bonding Method

The aforementioned method steps i)-iii) are necessarily applied to the first elastomeric substrate. Where the second substrate is a second elastomeric substrate, steps i)-iii) might also be applied to that second elastomeric substrate. In this circumstance, the treatment of a second elastomeric substrate may be performed independently of the treatment of the first elastomeric substrate or simultaneously therewith.

In an alternative embodiment, the second substrate may be non-elastomeric. In particular, the second substrate may be metallic. The type of second substrate will be determinative of the specific preparation process, if any, which may be applied prior to the performance of method step iv). However, it will be conventional for the substrate preparation to include the removal of foreign matter from the relevant surfaces. That said, exemplary methods for the pre-treatment of a second metallic substrate will be described in detail below.

### Metallic Substrate Surface Preparation

The pre-treatment of metallic substrates prior to the application of the adhesive compositions may desirably comprise at least one of: cleaning the surface(s) of the metallic substrate; abrading the surface(s) of the metallic substrate; applying an anti-corrosion coating to the metallic substrate; applying a conversion coating to the metallic substrate; and, applying a primer to the metallic substrate.

Cleaning serves to remove foreign matter from the surface(s) of the metallic substrate. Cleaning treatments are known in the art and can be performed in a single or multi-stage manner constituted by, for instance, the use of one or more of: an etching treatment with an acid suitable for the substrate and optionally an oxidizing agent; sonication; plasma treatment, including chemical plasma treatment, corona treatment, atmospheric plasma treatment and flame plasma treatment; immersion in a waterborne alkaline degreasing bath; treatment with a waterborne cleaning emulsion; treatment with a cleaning solvent, such as carbon tetrachloride or trichloroethylene; and, water rinsing, typically with deionized or demineralized water. In those instances where a waterborne alkaline degreasing bath is used, any of the degreasing agent remaining on the surface may typically be removed by rinsing the substrate surface with deionized or demineralized water.

Independently of the cleaning of the substrate, the surface of the metallic substrate may be abraded. Abrading typically includes: sanding, which sanding may be performed using, for instance, an orbital sander having sandpaper of a pre-determined grit; shot blasting; or, sand blasting. Where a blasting technique is employed, it is preferred that the surface conforms to Grade 2.5 or 3 of China National Standard GB8923-88, *Steel surface modification grade and rust removal grade before painting.* After surface abrasion, the metallic substrate may optionally be cleaned to remove any dust generated during the abrasion operation or any other acquired dirt or contaminants.

Herein the term *"conversion"* refers to a treatment of the surface of a metallic substrate which causes the surface material to be chemically converted to a different material. Typically, a metal or alloyed surface substrate is chemically treated to provide a tightly adherent conversion coating, all or part of which consists of a stabilized form - for instance an oxidized form - of the substrate metal. Such chemical conversion coatings can demonstrate high corrosion resistance as well as providing a strong bonding affinity for a subsequent primer or adhesive layer.

### Elastomeric Substrate Surface Preparation

Prior to step i) of the disclosed method, it is often advisable to pre-treat the relevant surfaces of the first elastomeric substrate to remove foreign matter therefrom. Such treatments are known in the art and can be performed in a single or multi-stage manner constituted by, for instance, the use of one or more of: sonication; immersion in a waterborne alkaline degreasing bath; treatment with a waterborne cleaning emulsion; treatment with a cleaning solvent, such as acetone, carbon tetrachloride or trichloroethylene; and, water rinsing, preferably with deionized or demineralized water. In those instances where a waterborne alkaline degreasing bath is used, any of the degreasing agent remaining on the surface should desirably be removed by rinsing the substrate surface with deionized or demineralized water.

Another preferred embodiment, the relevant surface is pre-treated by buffing the surface. This increases the roughness of the surface which is beneficial for the further steps described.

After said cleaning and optional buffing, the first and second compositions are sequentially or simultaneously applied to the surface of the first elastomeric substrate. Each composition may either be applied at ambient temperature. Alternatively, the temperature of each composition may independently be elevated prior to application to, for instance, a temperature in the range from 30°C to 90°C, for instance from 30°C to 70°C.

Techniques which may be used to apply the aqueous first and second composition to the surface of the first elastomeric substrate include to: dipping; painting; brushing; flow coating; roll coating; wiping; air-atomized spraying; air-assisted spraying; airless spraying; high-volume low-pressure spraying; and, air-assisted airless spraying.

Where the optional third composition is applied to the surface of the first substrate, this application may be effected by any application technique suitable for particulate or pasteous compositions. Mention may be made of: brushing; sprinkling; spray coating including electrostatic powder spraying; and, triboelectric coating.

The application of the third composition may occur before, after or simultaneously with the application of the first composition and, independently before, after or simultaneously with the application of the second composition. However, it is preferred that the second and third composition be applied either sequentially or simultaneously to the surface but both prior to the first composition. In an exemplary embodiment, the following application steps are followed in sequence: the second composition is applied to the surface; a cloth is placed on the surface with the second composition applied thereon and the third composition is then applied thereto; the first composition is applied on the cloth; the surface is covered with a foil, such as a plastic foil or similar covering, and the reaction of the first and second compositions allowed to proceed for a duration of from 5 to 60 minutes; the foil and the cloth are removed; and, the surface is washed with water and cleaned/dried with a cloth. It is noted that, when using a first composition which comprises a base, the usage of plastic foil in this manner is not required.

In various embodiments, the first, second and, where applicable, the third composition are each applied to the first elastomeric substrate surface in an amount of from 500 to 900 g/m², preferably from 600 to 700 g/m². The exact coating weight is dependent on the concentrations of each composition used, but the indicated ranges are particularly preferred if the concentrations disclosed herein are used.

The aforementioned incubation step (iii) for the compositions on the elastomeric surface is carried out for a time period long enough to allow the desired degree of surface modification. Again, this is dependent on the reaction conditions, but it has been found that the desired halogenated surface may be achieved at the stated concentrations of the compositions for incubation conditions comprising: a temperature of from 20 to 30°C; a pressure of from 900 to 1100 mbar, preferably from 1000 to 1050 mbar; and, a reaction time of from 5 to 60 minutes, preferably 15 to 30 minutes.

At the conclusion of the incubation step, the first elastomeric substrate may be dried using, for instance, ambient air drying, circulating warm air, forced air drying or infrared heating. The surface temperature of the substrate is controlled during drying: the peak substrate temperature need not exceed 80°C and should, more particularly, be in the range from 40 to 80°C.

### Adhesive Application

To interpose the above-described adhesive compositions between the substrates to be bonded, conventional application methods may be employed. Mention may be made of: brushing; roll coating; bar coating; doctor-blade application; printing methods; and, spraying methods, including but not limited to air-atomized spray, air-assisted spray, airless spray and high-volume low-pressure spray.

It is recommended that the adhesive compositions be applied to a substrate surface at a wet film thickness of from 10 to 500 µm. The application of thinner layers within this range is more economical and provides for a reduced likelihood of deleterious thick cured regions. However, great control must be exercised in applying thinner coatings or layers so as to avoid the formation of discontinuous cured films.

The curing of the applied adhesive compositions of the disclosure typically occurs at temperatures in the range of from 10°C to 100°C, preferably from 10°C to 80°C, and in particular from 20°C to 60°C. The temperature required to ensure a desired curing rate can be determined in the individual case by the skilled artisan, using simple preliminary tests if necessary. Of course, curing at lower temperatures within the aforementioned ranges is advantageous as it obviates the requirement to substantially heat or cool the mixture from the usually prevailing ambient temperature. Where applicable, however, the temperature of the mixture formed from the respective parts of the adhesive composition may be raised above the mixing temperature and / or the application temperature using conventional means, including microwave induction.

Upon curing, it is preferred that the layer of cured adhesive composition has a thickness of from from 50 to 300 µm, for instance from 100 to 300 µm or from 150 to 250 µm.

The following examples are illustrative of the present invention and are not intended to limit the scope of the invention in any way.

### EXAMPLES

The following commercially available materials were employed in the Examples:

| | |
|---|---|
| Adiprene LF TE-330: | -N=C=O functional pre-polymer, available from Lanxess. |
| Adiprene LFM G1000: | -N=C=O functional pre-polymer, available from Lanxess. |
| Desmophen NH 1220: | Aminofunctional reactant for polyisocyanates (*Amine Value: 240-248 mg KOH*/*g*), available from Covestro. |
| Desmodur ECO N 7300: | Biobased aliphatic polyisocyanate (PDI-trimer), available from Covestro. |
| Jeffamine SD2001: | Difunctional secondary amine (*Amine Hydrogen Equivalent Weight: 1000 g*/*eq.*), available from Huntsman). |
| Versalink P-1000: | Polymeric diamine (amine equivalent weight: 575-625 g/eq.), available from Evonik Operations GmbH. |
| Versalink P-650: | Polymeric diamine (amine equivalent weight: 335-475 g/eq.), available from Evonik Operations GmbH. |
| Ethacure 100: | Curative based on 3,5-diethyltoluene-2,4-diamine and 3,5-diethyltoluene-2,6-diamine, available from Ketjen. |
| Ethacure 420: | Amine curative, available from Ketjen. |
| Epodil LV5: | Unreactive diluent, available from Evonik Operations GmbH. |
| Cab-o-Sil TS 720: | Fumed silica, available from Graco Roberts. |
| Coatosil MP200: | Epoxy functional silane oligomer, available from Momentive Silanes. |
| Silquest A1170: | Amino-functional bis-silane, available from Momentive Silanes. |
| Desmodur 44 V 70L: | Polymeric isocyanate based on diphenylmethane, available from Covestro AG. |
| Desmodur VK5: | Diphenylmethanediisocyanate, available from Covestro AG. |
| Macroplast QR88: | Polyurethane prepolymer, available from Henkel Corporation. |
| Tiona 595: | Titanium dioxide, available from Tronox. |
| LINA 889: | Two-part (889A, 889B) solvent-free adhesive composition, available from Henkel Corporation. |
| LOCTITE PC 7386 | Two-part adhesive composition, available from Henkel Corporation. |

Compounds not mentioned above but used in the Examples were obtained from Sigma Aldrich.

### Preparation Example 1

As first and second compositions - to be utilized in the chlorination treatment of the elastomeric substrate *(method step i)*) - LOCTITE SF 7465 (sodium chloride solution) and LINA 885 (aqueous potassium peroxymonosulfate solution) were used.

### Preparation Examples 2-4

Three two-part (2K) adhesive compositions (hereinafter *PE2, PE3, PE4*) were prepared in accordance with the ingredients indicated in Table 2 below. The percentages by weight given in Table 1 are of the two-part (2K) composition *in toto* and not of the individual parts thereof.

**Table 2**

| **Ingredients** | **Preparation Example 2 (PE2, wt.%)** | **Preparation Example 3 (PE3, wt.%)** | **Preparation Example 4 (PE4, wt.%)** |
|---|---|---|---|
| **Part A** | | | |
| Desmophen NH 1220 | 50.00 | | 23.75 |
| Jeffamine SD 2001 | | 47.50 | 23.75 |
| CAB-O-Sil TS-720 | | 2.50 | 2.50 |

| **Part B** | | | |
|---|---|---|---|
| Adiprene LF TE-330 | 35.00 | 29.00 | 30.00 |
| Desmodur ECO N 7300 | 15.00 | 6.00 | 20.00 |
| Adiprene LFM G1000 | | 15.00 | |

In preparing Part A, all constituent liquid ingredients were weighed into a beaker under stirring. The fumed silica, where applicable, was then added and the mixture was homogenized in a speed mixer (1200 rpm, 1 minute). In preparing Part B, the ingredients were separately mixed in a speed mixer (1200 rpm; 1 minute). The first and second parts were then admixed under agitation in a speed mixer (1200 rpm; 1 minute).

### Example 1

The following test methods were then used to characterize: the adhesive compositions according to the disclosure (PE2-4); the comparative adhesive compositions (LOCTITE PC 7386, LINA 889); and, bonded rubber composites obtained using said adhesive compositions.

Shore Hardness: Sample discs were independently prepared from each of the defined adhesive compositions by transferring the newly mixed compositions into a disc-shaped Teflon mold (*60 mm diameter; 10 mm depth*) for solidification. The Shore hardness was determined by pressing a hand-held durometer - Zwick 3130 for Shore A hardness and Zwick 3131 for Shore D hardness - onto the sample discs (15 seconds contact time before measurement) in accordance with ISO 868. The hardness was recorded after the initial solidification and further monitored upon release of the disc from the mold every 5 minutes under room temperature and pressure, noting the attainment of both Shore 75 A and Shore 85 A hardness. The tabulated data point below represents final hardness as recorded after 24 hours of conditioning at room temperature and pressure.

Rubber Test Specimen Preparation: Test specimens are prepared using natural rubber coupons which have all been wiped with isopropyl alcohol (IPA) to remove dirt or grease therefrom. A fraction of the rubber coupons were then surface-treated in the following manner: the second composition as described in Table 1 above was applied to the cleaned surface of the rubber coupon using a plastic spatula; the rubber coupon was then covered with a cloth after which the first composition (Table 1) was applied thereto; the surface was covered with a plastic foil and the applied compositions permitted to react to 15 minutes; the cloth and the foil were removed; and, the treated rubber surface was washed with water and cleaned with a cloth. The rubber coupon was then permitted to dry.

Each adhesive composition to be evaluated was independently applied to the surface of a so-primed rubber coupon. Starting at one end, the respective adhesive compositions were spread in a single coating layer with an applicator stick to ensure coverage of a 30 mm x 300 mm area. A second, primed rubber coupon was then mated with the coated rubber coupon, with the treated side of the mating coupon contacting the adhesive composition.

Fixture Time: This quantification is used herein to denote the shortest time required by an adhesive composition to develop handling strength such that the aforementioned test specimens can be removed from fixtures, unclamped, or handled without stressing the bond, thereby affecting bond strength. The fixture time is determined herein using ASTM Standard D 1144.

T-Peel Resistance (N/mm): The testing of this parameter was based on the following standard: ISO 11339 Adhesives *180° Peel Test for Flexible-to-Flexible Bonded Assemblies.* At least three natural rubber test specimens were assembled and tested for each test point. Rigid glass plates were placed over each specimen and the obtained assembly was clamped using four equally spaced clamps on each side of the assembly - for a total of eight clamps - to ensure that the clamping load was evenly distributed. The assembly was permitted to cool to ambient temperature. The clamps were removed after 24 hours and the bonds were pulled to provide T-peel results.

Tensile Strength and Elongation: These properties were determined for the natural rubber test specimens in accordance with Henkel STM 708 *Tensile Strength and Elongation of Cured Elastomeric Adhesives and Coatings* AC89, which method is in demonstrated compliance with ISO/IEC Standard 17025:2017 (IAS Accreditation Criteria for Testing Laboratories).

The results of these tests are provided in Table 3 herein below.

**Table 3**

| **Property** | **PE2** | **PE3** | **PE4** | **LOCTITE PC 7386 (Comparative)** | **LINA 889 (Comparative)** |
|---|---|---|---|---|---|
| Substrates | Natural Rubber | Natural Rubber | Natural Rubber | Natural Rubber | Natural Rubber |
| Rubber Primer | As disclosed in Preparation Example 1 | As disclosed in Preparation Example 1 | As disclosed in Preparation Example 1 | As disclosed in Preparation Example 1 | As disclosed in Preparation Example 1 |
| Fixture Time (s) | 600 | 150 | 300 | 1800 - 3600 | 900 - 1800 |
| Shore A hardness | 71 | 35 | 65 | 65 | 66 |
| Tensile Strength (N/mm²) | 5.3 | 1.5 | 7.0 | 18.0 | 14.0 |
| Elongation (%) | 170 | 360 | 220 | *550* | 440 |
| T-Peel (N/mm) | 4.5 | 3.5 | 5.0 | 9.0, Rubber breaks | 9.0, Rubber breaks |

The adhesive compositions in accordance with the present disclosure (PE2, PE3, PE4) demonstrate short fixture times of at most 600 seconds without presenting poor hardness and tensile properties. As such, it is considered that these compositions may have utility in applications which require fast bonding.

In view of the foregoing description and example, it will be apparent to those skilled in the art that equivalent modifications thereof can be made without departing from the scope of the claims.

## Claims

1. A two-part (2K) adhesive composition comprising:
a first part comprising:
a) at least one secondary amine; and,
b) optionally at least one further active hydrogen compound which is distinct from the compound(s) of constituent a); and,
a second part comprising:
c) at least one polyisocyanate compound,
wherein the composition is **characterized by** a molar ratio of -N=C=O groups to active hydrogen atoms of from 0.9:1 to 2:1.

2. The two-part (2K) adhesive composition according to claim 1 comprising, based on the weight of the composition:
from 20 to 80 wt.%, preferably from 20 to 60 wt.% and more preferably from 30 to 60 wt.% of a) said at least one secondary amine;
0 to 10 wt.%, preferably from 0 to 5 wt.% and more preferably from 0 to 2 wt.% of b) said least one further active hydrogen compound which is distinct from the compound(s) of constituent a); and,
from 20 to 80 wt.%, preferably from 20 to 60 wt.% and more preferably from 30 to 60 wt.% c) said at least one polyisocyanate compound,
wherein the composition is **characterized by** a molar ratio of -N=C=O groups to active hydrogen atoms of from 0.9:1 to 2:1, preferably from 0.9:1 to 1.5:1 and more preferably from 0.9:1 to 1.2:1.

3. The two-part (2K) adhesive composition according to claim 1 or claim 2, wherein constituent a) said least one secondary amine does not possess primary amino groups.

4. The two-part (2K) adhesive composition according to any one of claims 1 to 3, wherein constituent a) comprises a1) at least compound in accordance with Formula (A1) 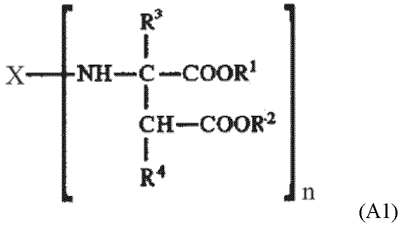 in which:
X is an organic group having a valency n and which is inert towards isocyanate (-N=C=O) functional groups at a temperature of 100°C or less;
R¹ is an organic group which is inert towards isocyanate (-N=C=O) functional groups at a temperature of 100°C or less;
R² is an organic group which is inert towards isocyanate (-N=C=O) functional groups at a temperature of 100°C or less;
or, R¹ and R² together with the β-carbon atom form a cycloaliphatic or heterocyclic ring;
R³ and R⁴ may be the same or different and represent hydrogen or an organic group which is inert towards isocyanate (-N=C=O) functional groups at a temperature of 100°C or less; and,
n is an integer of from 1 to 6.

5. The two-part (2K) adhesive composition according to any one of claims 1 to 4, wherein constituent a) comprises a2) at least one polyetheramine having secondary amino groups, preferably said polyetheramine has a weight average molecular weight (Mw) of from 500 to 5000 daltons, preferably from 500 to 2500 daltons.

6. The two-part (2K) adhesive composition according to any one of claims 1 to 5, wherein constituent c) comprises ci) at least one -N=C=O functional pre-polymer.

7. The two-part (2K) adhesive composition according to claim 6, wherein ci) said at least one -N=C=O functional pre-polymer is **characterized by** at least one of:
an NCO content of from 5 to 30 wt.% as determined according to EN ISO 14896;
an NCO functionality of from 2.0 to 3.0;
a viscosity at 20°C of from 300 to 35,000 mPa.s; and,
a number average molecular weight (Mn) of from 500 to 30000 g/mol.

8. Use of the adhesive composition as defined in any one of claims 1 to 7 for bonding a first elastomeric substrate to either a second elastomeric substrate or a metallic substrate.

9. A method for forming a bond between a first elastomeric substrate and a second substrate, said process comprising:
i) applying a first and a second composition to the surface of said first substrate, wherein:
the first composition is an aqueous composition comprising chloride (Cl⁻); and,
the second composition is an aqueous composition comprising peroxymonosulfate (HSO₅⁻/SO₅²⁻);
ii) optionally applying a third composition comprising activated carbon to the surface of said first substrate;
iii) incubating the first, second and optionally third composition with said first substrate for a time period and under conditions that allow chlorination of the surface of said first substrate;
iv) interposing the adhesive composition as defined in any one of claims 1 to 7 between the chlorinated surface of the first substrate and the surface of the second substrate; and,
v) permitting the interposed adhesive composition to cure to form said bond.

10. The method according to claim 9, wherein said second substrate is a metallic substrate or said first substrate and said second substrate each comprise or consist of at least one elastomer having a glass transition temperature (Tg) of from -120 to 0°C.

11. The method according to claim 9 or claim 10, wherein said first substrate and said second substrate are independently selected from the group consisting of: natural rubber (NR); derivatives of natural rubber; ethylenepropylene-diene rubber (EPDM); ethylene propylene rubber (EPM); acrylonitrile-butadiene rubber (NBR); polychloroprene; styrene-butadiene rubber (SBR); styrene-butadiene-styrene rubber (SBS); butadiene rubber (BR); isoprene rubber (IR); styrene ethylene butylene styrene rubber (SEBS); rubbers based on copolymers of any two or more of styrene, butadiene, ethylene and isoprene; and, blends thereof;
preferably wherein said first substrate and said second substrate are independently selected from natural rubber or styrene-butadiene rubber.

12. The method according to any one of claims 9 to 11, wherein said first composition is an aqueous solution of a chloride salt which contains chloride ions, preferably said aqueous solution contains chloride ions (Cl⁻) in an amount of from 1 to 6 moles per litre.

13. The method according to any one of claims 9 to 12, wherein said second composition is an aqueous composition comprising a peroxymonosulfate salt which contains peroxymonosulfate anions (HSO₅⁻/SO₅²⁻), preferably wherein the peroxymonosulfate (HSO₅⁻/SO₅²⁻) concentration of the second composition is from 10 to 30 moles per litre.

14. The method according to any one of claims 9 to 13, wherein said first (F) and second (S) compositions are applied at a ratio by weight (F:S) of from 3:1 to 1:3, preferably 2:1 to 1:2 and more preferably 1.5:1 to 1:1.5.

15. A bonded product obtainable or obtained by the method as defined in any one of claims 9 to 14.
